(19) Europäisches Patentamt

European Patent Office

Office européen des brevets

(11) **EP 4 191 530 A1**

(12) **DEMANDE DE BREVET EUROPEEN**

(43) Date de publication:
**07.06.2023 Bulletin 2023/23**

(21) Numéro de dépôt: **22210423.4**

(22) Date de dépôt: **30.11.2022**

(51) Classification Internationale des Brevets (IPC):
**G06T 7/73** (2017.01)    **G06V 10/82** (2022.01)
**G06V 20/70** (2022.01)

(52) Classification Coopérative des Brevets (CPC):
**G06V 10/82; G06T 7/73; G06V 20/70**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **03.12.2021 FR 2112893**

(71) Demandeur: **COMMISSARIAT À L'ÉNERGIE ATOMIQUE ET AUX ÉNERGIES ALTERNATIVES
75015 Paris (FR)**

(72) Inventeurs:
• **BOJKO, Adrian**
**91191 GIF-SUR-YVETTE CEDEX (FR)**
• **LE BORGNE, Hervé**
**91191 GIF-SUR-YVETTE CEDEX (FR)**
• **TAMAAZOUSTI, Mohamed**
**91191 GIF-SUR-YVETTE CEDEX (FR)**
• **DUPONT, Romain**
**91191 GIF-SUR-YVETTE CEDEX (FR)**

(74) Mandataire: **Atout PI Laplace
Immeuble "Visium"
22, avenue Aristide Briand
94117 Arcueil Cedex (FR)**

(54) **PROCÉDÉ DE LOCALISATION ET CARTOGRAPHIE SIMULTANÉES INTÉGRANT UN MASQUAGE TEMPOREL AUTO-SUPERVISÉ ET MODÈLE D'APPRENTISSAGE AUTOMATIQUE POUR GÉNÉRER UN TEL MASQUAGE**

(57) Procédé, mis en œuvre par ordinateur, d'apprentissage automatique d'un modèle de prédiction (402) configuré pour déterminer, pour une séquence d'images donnée associée à une séquence de masquage spatial desdites images, une séquence de masquage temporel constituée, pour chaque image, d'une décision d'application de tout ou partie du masquage spatial à l'image, le modèle de prédiction (402) étant entraîné à partir de données d'apprentissage pour déterminer une séquence de masquage temporel qui optimise un critère de performances prédéterminé d'un algorithme de cartographie et localisation simultanées d'un dispositif mobile apte à acquérir ladite séquence d'images et à localiser le dispositif mobile dans son environnement.

FIG.4

EP 4 191 530 A1

**Description**

L'invention concerne le domaine de la vision par ordinateur et plus précisément des procédés et systèmes de localisation et cartographie simultanées aussi connus sous l'acronyme anglo-saxon SLAM pour « Simultaneous Localization And Mapping ». Ces procédés et systèmes visent à localiser un dispositif mobile dans son environnement en estimant sa trajectoire et en reconstruisant son environnement simultanément. Les algorithmes mis en œuvre pour cela fonctionnent à partir de données acquises par un système de perception de l'environnement, embarqué sur le dispositif mobile. Un système de perception de l'environnement est, par exemple, constitué d'une seule caméra monoculaire ou de deux caméras fonctionnant en stéréo ou d'un système LIDAR ou d'un capteur de profondeur ou encore de tout autre type de dispositif intégrant des capteurs permettant de caractériser l'environnement du dispositif mobile au cours de son déplacement de sorte à pouvoir cartographier cet environnement en trois dimensions et localiser le dispositif au sein de cet environnement. Les procédés et systèmes SLAM sont utilisés notamment, mais pas uniquement, pour des applications dans le domaine des véhicules autonomes, du pilotage automatique de robots mobiles ou encore pour des casques de réalité virtuelle et augmentée.

Dans ce contexte, l'invention propose un procédé de localisation et cartographie simultanées qui intègre une étape de masquage temporel déterminé à partir d'un modèle appris de manière auto-supervisée qui permet, pour une séquence d'images donnée, de déterminer la séquence de masquage temporel la plus optimale, au sens de l'apprentissage automatique et du point de vue des performances de l'algorithme de localisation. Pour cela, les annotations sont déterminées automatiquement à partir des données, sans intervention manuelle. L'invention a aussi pour objet une méthode d'annotation automatique de données d'apprentissage pour l'apprentissage du modèle de génération des séquences de masquage temporel.

La littérature des méthodes dites « SLAM » comporte de nombreuses propositions d'algorithmes divers ayant tous pour objectif de reconstruire une trajectoire la plus précise possible du dispositif mobile dans son environnement et ce, quelle que soit la nature de l'environnement et en particulier la présence d'objets fixes ou mobiles dans cet environnement.

Les premières méthodes « SLAM » étaient initialement conçues pour un environnement statique et souffrent d'une baisse de performances importante, voire d'une mise en échec, lorsque des objets mobiles apparaissent dans la scène observée.

Pour cette raison, des approches de méthodes « SLAM » dynamiques ont été mises au point afin d'être plus robustes à la présence d'objets mouvants, en particulier lorsque ceux-ci occupent une part significative de la scène observée.

L'une des approches connues propre aux méthodes « SLAM » dynamiques consistent à masquer spatialement une partie de la scène afin d'éliminer les éléments qui perturbent le calcul de la trajectoire du porteur de la caméra. Différentes méthodes connues permettent de générer de tels masques spatiaux en détectant et caractérisant les objets dont le masquage améliore les performances globales.

Cependant ces méthodes présentent encore certaines limitations et il existe donc un besoin pour améliorer les techniques de masquage afin de renforcer encore les performances globales d'une méthode « SLAM ».

La référence [0] présente une revue de différentes méthodes « SLAM » selon l'art antérieur. Le principe général de ces méthodes consiste à identifier des caractéristiques locales dans la scène telles que des points d'intérêts ou des contours, puis à estimer la pose de la caméra à partir de ces caractéristiques. Dans un fonctionnement nominal, les caractéristiques locales associées à des éléments statiques de la scène constituent des caractéristiques utiles pour l'estimation de pose (encore appelées « inliers »), tandis que les caractéristiques locales associées à des éléments mouvants dans la scène constituent des caractéristiques locales qui perturbent l'estimation de pose (encore appelées « outliers ») lorsque ceux-ci sont minoritaires dans l'image.

Les méthodes « SLAM » récentes comme, par exemple, la méthode « ORB-SLAM 2 » décrite dans la référence [1] sont relativement robustes aux petits objets mouvants dans la mesure où ils occupent une part très minoritaire de la scène, mais leurs performances chutent quand ces objets occupent une part significative de la scène.

Le principe des méthodes « SLAM » dites dynamiques est de masquer les objets mouvants, de manière à ne considérer que la partie statique de la scène pour estimer la trajectoire du porteur mobile à partir des descripteurs locaux. Deux grandes familles d'approches se distinguent pour déterminer ce qu'il faut masquer dans la scène :

- Les approches basées sur la détection de mouvement.

- Les approches basées sur la détection d'objets supposés potentiellement dynamiques.

- Il existe aussi des méthodes hybrides combinant ces deux approches.

Les références [2,3 ,4] divulguent plusieurs exemples de méthodes « SLAM » dynamiques basées sur la détection de mouvement. Ces méthodes estiment les régions mouvantes de l'image, typiquement avec une approche basée sur le flot optique. Ces régions sont alors masquées pendant l'estimation de la pose de la caméra qui inclue la position et l'orientation de la caméra, ce qui signifie que les caractéristiques locales détectées dans ces régions ne sont pas prises en compte par l'algorithme.

Un inconvénient des méthodes de masquage basées sur la détection de mouvement est que les régions mouvantes sont supposées minoritaires dans l'image. Si elles deviennent majoritaires, elles seront considérées comme le fond de référence, et l'algorithme « SLAM » se repèrera à partir de ces régions mouvantes, induisant des erreurs de positionnement. Une telle situation arrive typiquement quand un objet mouvant est proche de la caméra, soit parce que l'objet s'en est rapproché, soit parce que le dispositif équipé de la caméra s'est lui-même rapproché d'un objet momentanément statique qui se met ensuite en mouvement (ex : bouchon automobile). Cette situation correspond à une inversion de consensus.

Pour pallier ce problème, les approches basées sur la segmentation ou détection d'objet, telles qu'illustrées notamment dans la référence [5], proposent de choisir d'exclure a priori les régions correspondant à des classes d'objets susceptibles de se mettre en mouvement (par exemple véhicule, piéton...), indépendamment du fait qu'ils soient effectivement en mouvement ou pas au moment de la captation par la caméra. Les régions correspondant à ces objets sont typiquement estimées avec une méthode de segmentation sémantique telle que par exemple la méthode « Mask-RCNN » décrite dans la référence [6]. Ces régions sont alors masquées pendant l'estimation de la trajectoire par l'algorithme SLAM, ce qui signifie que les caractéristiques locales détectées dans ces régions ne sont pas prises en compte.

Les méthodes basées sur la détection d'objets présentent également plusieurs inconvénients. En premier lieu, la liste de classes d'objets potentiellement mouvants est définie a priori et constitue une liste finie d'objets possibles. Si un objet mouvant non présent dans la liste (c'est-à-dire non prévu dans le cas d'usage) se déplace dans la scène, il n'est pas masqué et est susceptible de provoquer des erreurs d'estimation par l'algorithme SLAM.

Ensuite, les objets mouvants présents dans la liste sont masqués même s'ils sont statiques au moment de leur captation par la caméra du dispositif. S'ils occupent une part très majoritaire de la scène, par exemple quand ils sont proches de la caméra, la plus grande partie des caractéristiques locales seront ignorées par l'algorithme SLAM. Le nombre de caractéristiques locales exploitées sera alors réduit et il sera plus difficile d'estimer le mouvement de la caméra de manière robuste.

Enfin, la détection sémantique peut faillir et l'objet être identifié à tort comme non mouvant. Au contraire, un objet statique peut être incorrectement exclu du fait d'une mauvaise identification par la reconnaissance d'objet.

Les approches hybrides combinent les deux critères précités afin d'améliorer la robustesse globale des méthodes SLAM.

Dans le cas d'une captation monoculaire, la méthode DynaSLAM décrite dans la référence [7] revient à une méthode basée sur la détection d'objet. Quand l'information de profondeur est disponible au moyen d'un dispositif stéréo, l'identification des régions est affinée au moyen d'un processus supplémentaire de détection de mouvement. Des régions supplémentaires peuvent être identifiées comme mouvantes par ce moyen, et être également masquées lors de l'estimation de la trajectoire par l'algorithme SLAM. Ces régions peuvent ne pas être inclues dans la liste des objets mouvants a priori (exemple : livre déplacé par un piéton).

Un inconvénient des méthodes hybrides précitées est que, dans le cas monoculaire, on retrouve les problèmes des approches basées sur la détection d'objets dans le cas stéréo, l'approche peut ajouter des régions de masquage, mais ne peut pas en retirer même si cela est pertinent pour améliorer la robustesse de l'algorithme SLAM.

La méthode Slamantic décrite dans la référence [8] est basée sur une détection d'objet mais ajoute un procédé de vérification de la consistance de la position des points 3D au cours du temps, ce qui revient à vérifier si les objets détectés sont mouvants. Ainsi, un objet considéré mouvant de par sa classification sémantique (ex : une voiture), peut être identifié comme ne bougeant momentanément pas (ex : voiture garée) et donc être utilisé pour l'estimation de la trajectoire SLAM. En pratique, la méthode consiste à attribuer un « facteur dynamique » (df = dynamic factor) à chaque point 3D, dont la valeur détermine s'il doit être utilisé pour le calcul de la trajectoire SLAM ou pas. Le calcul de ce facteur dynamique implique plusieurs seuils à régler manuellement, dont certains pour chaque type de classe d'objet considérée. Dans un nombre fixe d'images précédentes, la méthode compte le nombre de fois où le point 3D est reprojeté correctement lors du calcul réalisé. Si ce nombre dépasse un seuil, cela accroît ses chances d'être pris en compte pour le calcul de trajectoire.

Un inconvénient de cette méthode est qu'elle nécessite le réglage de seuils pour chaque classe d'objet potentiellement nuisible à l'algorithme SLAM. Par ailleurs, si un tel objet occupe une grande part de la scène (cas d'inversion de consensus) la méthode le choisit comme référence, similairement aux méthodes basées sur la détection de mouvement. Un autre inconvénient est que la mémoire est arbitraire et limitée aux N dernières trames.

La méthode décrite dans la référence [9] utilise une phase d'apprentissage. Elle suppose que les régions où l'algorithme SLAM identifie de nombreux points d'intérêts non pertinents ou « outliers » sont des zones mouvantes qui sont nuisibles. Ainsi, sur des séquences « faciles » de telles zones sont identifiées et leurs caractéristiques sont apprises au moyen d'un réseau neuronal profond. Cette méthode ne fait pas d'a priori sur le fait qu'une sémantique particulière ou un mouvement soit associée à la zone. Le modèle neuronal appris est ensuite utilisé en phase de production sur des séquences plus difficiles, où les régions pouvant perturber l'estimation de la trajectoire par l'algorithme SLAM sont identifiées et masquées.

Un inconvénient de cette méthode est que si un objet pouvant bouger ne bouge pas dans les séquences « faciles » d'apprentissage, il ne sera pas appris par le modèle neuronal et donc pas identifié en phase d'inférence. Au contraire, si une région est apprise comme pouvant perturber l'algorithme SLAM, elle sera systématiquement masquée en phase de production, même si elle ne perturbe pas effectivement l'algorithme SLAM (par exemple parce qu'elle est statique au moment de la captation).

Les méthodes de l'art antérieur précitées présentent toutes certains inconvénients décrits ci-dessus.

L'invention propose une nouvelle approche qui vise à améliorer les méthodes impliquant un masquage par détection d'objets en déterminant pour chaque classe d'objets à masquer et/ou pour chaque image, si le masquage desdits objets apporte ou non un gain de performances final à l'algorithme et plus précisément à l'estimation de la trajectoire du dispositif mobile.

Pour cela l'invention propose de déterminer, par apprentissage, un modèle de prédiction qui, pour une séquence d'images donnée, détermine quand il est opportun d'appliquer le masquage spatial des classes d'objets, de sorte à améliorer les performances de l'algorithme SLAM.

Le modèle de prédiction est déterminé par apprentissage auto-supervisé en ce que les données d'apprentissage sont annotées automatiquement au moyen d'une méthode particulière qui ne nécessite pas d'annotations manuelles des données par un expert.

L'invention diffère des méthodes « SLAM » dynamiques ou hybrides selon l'art antérieur en ce qu'elle implique, pour chaque image, une décision intelligente de masquage ou non des objets identifiés par le masque spatial, dans une optique d'améliorer réellement les performances finales.

La méthode selon l'invention est basée sur un apprentissage auto-supervisé en fonctionnement nominal, elle détermine automatiquement (sans réglage manuel) les caractéristiques des régions à masquer ; au contraire la méthode décrite dans la référence [8] nécessite le réglage manuel de plusieurs seuils, pour chaque classe d'objet. Tout comme la référence [8], l'invention fait intervenir une forme de mémoire par rapport à des images précédant l'image courante. La mémoire proposée par la méthode de la référence [8] est toutefois fixée arbitrairement et consiste essentiellement à compter le nombre de fois où un point a été reprojeté correctement dans un nombre fixe d'images précédentes. Au contraire, l'invention implique une décision de masquer ou pas au moyen d'un modèle neuronal apprenant à partir de toute la séquence passée. Elle prend ainsi en compte des dépendances temporelles courtes et longues.

En cas d'inversion de consensus, les méthodes basées sur la détection de mouvement ne fonctionnent pas. Au contraire, la méthode selon l'invention continue d'ignorer la région problématique et se base sur les parties fiables de la scène pour calculer la trajectoire.

L'invention permet avantageusement de réduire le coût nécessaire à l'annotation des données d'apprentissage du modèle de prédiction. Elle permet d'optimiser les performances de tout type d'algorithme SLAM, sans faire appel à un expert humain. Elle est adaptable à tout type d'algorithme SLAM basé sur l'extraction de caractéristiques visuelles locales.

L'invention a pour objet un procédé, mis en œuvre par ordinateur, d'apprentissage automatique d'un modèle de prédiction configuré pour déterminer, pour une séquence d'images donnée associée à une séquence de masquage spatial desdites images, une séquence de masquage temporel constituée, pour chaque image, d'une décision d'application de tout ou partie du masquage spatial à l'image, le modèle de prédiction étant entraîné à partir de données d'apprentissage pour déterminer une séquence de masquage temporel qui optimise un critère de performances prédéterminé d'un algorithme de cartographie et localisation simultanées d'un dispositif mobile apte à acquérir ladite séquence d'images et à localiser le dispositif mobile dans son environnement, le critère de performances étant basé sur une métrique d'évaluation de performance dudit algorithme utilisant ladite séquence de masquage temporel pour masquer la séquence d'images au moyen de la séquence de masquage spatial, la métrique d'évaluation de performances étant prise parmi une première métrique d'évaluation de la précision de la trajectoire estimée par l'algorithme de cartographie et localisation, une seconde métrique d'évaluation d'un pourcentage d'images dans la séquence d'images pour lequel une trajectoire a été calculée par l'algorithme de cartographie et localisation, ou une combinaison de la première métrique et de la seconde métrique.

Selon un aspect particulier de l'invention, ledit modèle de prédiction est au moins basé sur un réseau de neurones récurrent.

Selon un aspect particulier de l'invention, ledit modèle de prédiction est constitué d'un premier modèle d'apprentissage destiné à générer une représentation spatiale à partir desdites images et d'au moins un réseau de neurones récurrent destiné à déterminer la décision d'application de tout ou partie du masquage spatial à une image à partir de ladite représentation spatiale.

Selon un aspect particulier de l'invention, le réseau de neurones récurrent est configuré pour fournir une probabilité d'amélioration des performances de l'algorithme de cartographie et localisation simultanées en fonction de l'application de tout ou partie du masquage spatial et le procédé comprend en outre une étape de seuillage de la dite probabilité pour générer une décision binaire d'application de tout ou partie du masquage spatial à chaque image.

L'invention a aussi pour objet un procédé, mis en œuvre par ordinateur, d'annotation automatique de données d'apprentissage pour entraîner un modèle de prédiction configuré pour déterminer, pour une séquence d'images donnée associée à une séquence de masquage spatial desdites images, une séquence de masquage temporel constituée, pour chaque image, d'une décision d'application de tout ou partie du masquage spatial à l'image, le procédé comprenant les étapes de :

- Recevoir un ensemble de données d'apprentissage comprenant une séquence d'images et une séquence de masquage spatial associée à la séquence d'images,

- Sélectionner un sous-ensemble de séquences de masquage temporel parmi toutes les séquences possibles, une séquence de masquage temporel étant constituée, pour chaque image à masquer, d'une décision binaire d'application de tout ou partie du masquage spatial à l'image,

- Déterminer, pour chaque séquence de masquage temporel, une métrique d'évaluation de performance d'un algorithme de cartographie et localisation simultanées utilisant ladite séquence de masquage temporel pour masquer la séquence d'images au moyen de la séquence de masquage spatial,

- Agréger au moins une partie des séquences de masquage temporel à l'aide d'une combinaison pondérée par leurs métriques d'évaluation de performance, afin de produire une unique séquence de masquage temporel constituant une séquence d'annotations dudit ensemble de données d'apprentissage,

- la métrique d'évaluation de performances étant prise parmi une première métrique d'évaluation de la précision de la trajectoire estimée par l'algorithme de cartographie et localisation, une seconde métrique d'évaluation d'un pourcentage d'images dans la séquence d'images pour lequel une trajectoire a été calculée par l'algorithme de cartographie et localisation, ou une combinaison de la première métrique et de la seconde métrique.

Selon un aspect particulier de l'invention, l'étape de sélectionner un sous-ensemble de séquences de masquage temporel consiste à sélectionner aléatoirement et uniformément un nombre restreint prédéterminé de séquences binaires comprenant des blocs d'au moins $k_0$ valeurs à « 0 » consécutives et $k_1$ valeurs à « 1 » consécutives, avec $k_0$ et $k_1$ deux nombres entiers strictement positifs.

Selon un aspect particulier de l'invention, la métrique d'évaluation de performances est donnée par la formule $p*e^{-\lambda*\alpha}$, où $\alpha$ désigne la première métrique, p désigne la seconde métrique et $\lambda$ est un paramètre prédéterminé.

Selon un aspect particulier de l'invention, l'étape d'agréger au moins une partie des séquences de masquage temporel consiste au moins à :

- calculer une combinaison des séquences de masquage temporel ou des différences par paires de séquences de masquage temporel, pondérées par leurs métriques d'évaluation de performance,

- normaliser la combinaison entre 0 et 1,

- appliquer au moins un seuil prédéterminé à la combinaison normalisée pour produire la séquence d'annotations.

Selon une variante de réalisation, le procédé d'annotation automatique de données d'apprentissage selon l'invention comprend en outre les étapes de :

- Appliquer plusieurs seuils prédéterminés à la combinaison normalisée pour produire plusieurs séquences d'annotations candidates,

- Évaluer les performances de l'algorithme de cartographie et localisation simultanées pour chaque séquence d'annotations candidates et retenir la séquence d'annotations qui produit la métrique d'évaluation la plus optimale.

L'invention a encore pour objet un procédé d'apprentissage automatique d'un modèle de prédiction selon l'invention dans lequel ledit modèle est entraîné au moyen des données d'apprentissage obtenues par le procédé d'annotation automatique selon l'invention.

L'invention a encore pour objet un procédé de cartographie et localisation simultanées d'un dispositif mobile comprenant la mise en œuvre d'un modèle de prédiction entraîné au moyen du procédé d'apprentissage automatique selon l'invention pour appliquer, pour chaque image d'une séquence d'images donnée acquise par le dispositif mobile et associée à une séquence de masquage spatial, une décision d'application de tout ou partie du masquage spatial à l'image au cours de l'exécution d'un algorithme de cartographie et localisation simultanées du dispositif mobile.

Dans une variante de réalisation, le procédé de cartographie et localisation simultanées d'un dispositif mobile selon l'invention comprend les étapes de :

- acquérir une séquence temporelle d'images à l'aide du dispositif mobile et, pour chaque image reçue,

- Déterminer un ensemble de points d'intérêts dans l'image,

- Exécuter le modèle de prédiction pour l'image reçue et une pluralité d'images antérieures afin de déterminer une décision de masquage spatial pour tout ou partie de l'image reçue,

- Si la décision de masquage spatial est positive, générer un masque spatial et masquer l'ensemble de points d'intérêts de l'image au moyen du masque spatial pour générer un ensemble de points d'intérêts filtrés,

- Appliquer un algorithme d'estimation et suivi de pose de caméra audit ensemble de points d'intérêts filtrés pour déterminer une trajectoire du dispositif mobile dans son environnement.

Selon un aspect particulier de l'invention, une séquence de masquage spatial est une séquence de masquage sémantique configurée pour masquer une ou plusieurs classe(s) d'objets dans la séquence d'images.

Selon un aspect particulier de l'invention, une séquence de masquage temporel est constituée de décisions binaires de masquage pour chaque classe d'objets dans l'ensemble de la séquence d'images.

Selon un aspect particulier de l'invention, une séquence de masquage temporel est en outre constituée de décisions binaires de masquage pour chaque image et chaque classe d'objets dans l'image.

L'invention a encore pour objet un produit programme d'ordinateur comprenant des instructions de code pour la mise en œuvre des procédés selon l'invention.

L'invention a encore pour objet un système de cartographie et localisation simultanées d'un dispositif mobile comprenant un dispositif mobile apte à acquérir des données de perception de son environnement pour produire une séquence d'images et une unité de calcul configurée pour mettre en œuvre le procédé de cartographie et localisation simultanées selon l'invention à partir de ladite séquence d'images.

D'autres caractéristiques et avantages de la présente invention apparaîtront mieux à la lecture de la description qui suit en relation aux dessins annexés suivants.

[Fig. 1] illustre, sur un schéma fonctionnel, le fonctionnement d'une méthode de cartographie et localisation statique selon l'art antérieur,

[Fig. 2] illustre, sur un schéma fonctionnel, le fonctionnement d'une méthode de cartographie et localisation dynamique selon l'art antérieur,

[Fig. 3] illustre, sur un schéma fonctionnel, le fonctionnement d'une méthode de cartographie et localisation selon un mode de réalisation de l'invention,

[Fig. 4] illustre, sur un schéma fonctionnel, un moteur de prédiction automatique configuré pour déterminer une décision de masquage temporel pour la méthode de la figure 3, selon un mode de réalisation de l'invention,

[Fig. 5] illustre, sur un organigramme, les étapes de mise en œuvre d'une méthode d'annotation automatique de données d'apprentissage pour entrainer le moteur de prédiction automatique de la figure 4,

[Fig. 6] illustre un exemple de réalisation de sélection de masques temporels pour la mise en œuvre de la méthode de la figure 5.

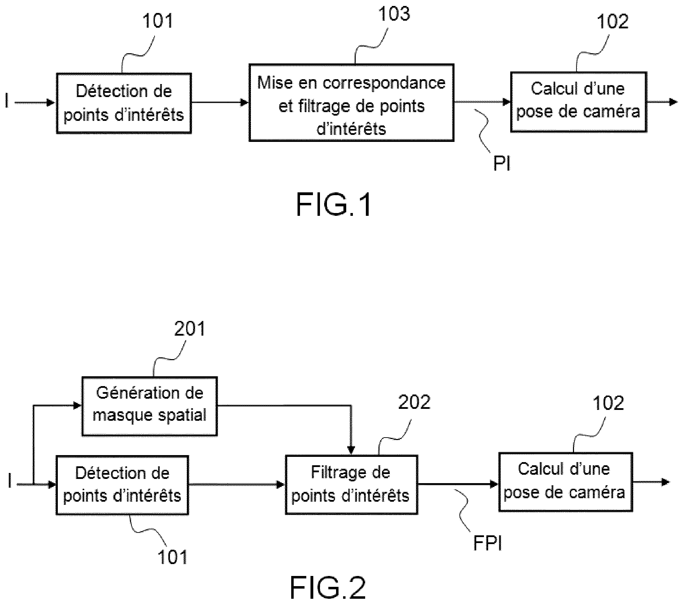

La figure 1 représente schématiquement les étapes de fonctionnement d'une méthode « SLAM » statique selon l'art antérieur. Une telle méthode reçoit en entrée une séquence d'images capturées par un dispositif d'acquisition embarqué sur un porteur mobile. Pour chaque image I capturée à l'instant t, l'algorithme SLAM applique essentiellement deux étapes: une première étape 101 de détection de points d'intérêts qui permet d'extraire des points d'intérêts particuliers PI dans l'image, une seconde étape 102 de calcul d'une pose de la caméra qui produit une cartographie de l'environnement du porteur et une estimation de sa trajectoire dans son environnement à l'instant t. Une étape de mise en correspondance des points d'intérêts 103 avec les images est réalisée avant l'étape 102 de calcul de la pose de la caméra. Cette étape 103 peut inclure un filtrage des points d'intérêts afin d'éliminer les points d'intérêts correspondant à des objets mobiles.

Différents types d'algorithmes connus peuvent être utilisés pour implémenter les étapes 101 et 102, par exemple ceux décrits dans la référence [0]. L'invention ne porte pas spécifiquement sur la réalisation de ces algorithmes.

La figure 2 représente les étapes de fonctionnement d'une méthode « SLAM » dynamique selon l'art antérieur telle que discuté ci-dessus. Une telle méthode comporte, en plus des étapes 101,102 décrites à la figure 1, une étape 201 de génération d'un masque spatial par détection sémantique ou détection de mouvements et de filtrage des points d'intérêts situés dans les zones de l'image masquées et une étape 202 d'application du masque spatial généré pour filtrer les points d'intérêts en sortie de l'étape 101. L'étape 102 de calcul de la pose de la caméra est alors appliquée à un ensemble filtré de points d'intérêts FPI ne comprenant que les points d'intérêts situés dans des zones non masquées.

La génération d'un masque sémantique est par exemple réalisée via la méthode de la référence [6] ou toute autre méthode appropriée basée sur une détection sémantique de classes d'objets dans une séquence d'images.

Les méthodes des figures 1 et 2 présentent les inconvénients discutés précédemment.

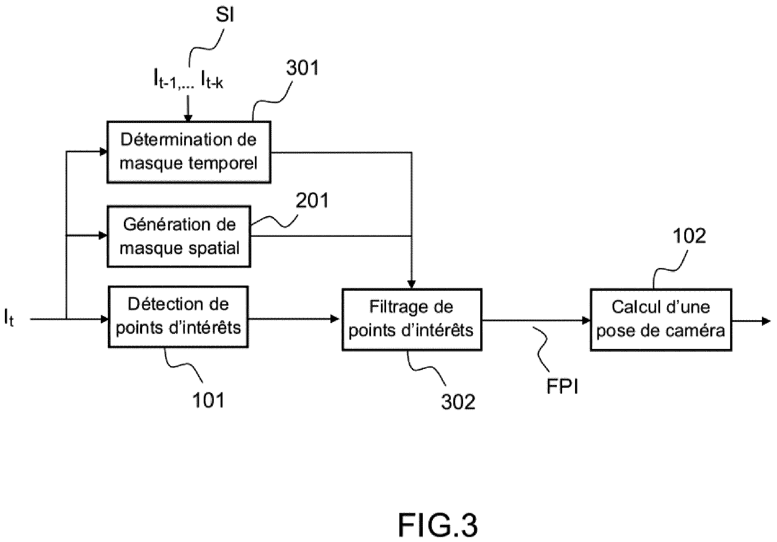

La figure 3 schématise les étapes de fonctionnement d'une méthode de cartographie et localisation simultanées selon un mode de réalisation de l'invention. Le schéma de la figure 3 représente à la fois les étapes de la méthode selon l'invention et les modules de calculs mis en œuvre par un système de localisation et cartographie simultanées selon l'invention.

La méthode reçoit en entrée une séquence temporelle d'images SI successives. Comme indiqué précédemment, les images constituent des données de perception de l'environnement d'un porteur mobile en mouvement. Elles peuvent être acquises par différents moyens de captures : caméra monoculaire, couple de caméras, dispositif LIDAR, caméra de profondeur, ou plus généralement tout dispositif embarqué sur un porteur mobile apte à acquérir des données de perception de l'environnement du porteur.

L'étape 101 de calcul de points d'intérêts dans l'image courante $I_t$ est identique à celle des méthodes de l'art antérieur.

A chaque instant t, l'algorithme reçoit une image $I_t$ et garde également en mémoire un ensemble d'images précédemment acquises dans la séquence temporelle. Cet ensemble d'images n'est pas forcément constitué des images qui précèdent immédiatement l'image $I_t$ mais est, plus généralement, constitué d'un groupe quelconque d'images antérieures, qui ne sont pas forcément consécutives.

A l'étape 301, on détermine, à partir de l'ensemble d'images, un masque temporel à partir d'un modèle de prédiction préalablement appris au moyen d'un moteur d'apprentissage automatique. Un masque temporel est constitué d'un ensemble de décisions binaires, par exemple représentées sous la forme d'une matrice de taille N par p, avec N le nombre d'images de la séquence et p le nombre de classes d'objets détectées par une méthode de masquage sémantique 201. Les classes d'objets correspondent préférablement à des objets mobiles ou susceptibles de se déplacer dans la scène, par exemple des véhicules ou des piétons. Ainsi, le masque temporel généré à l'étape 301 donne pour chaque image $I_t$ et pour chaque classe d'objets à masquer dans l'image $I_t$, une décision binaire de masquer ou non cet objet.

Dans une variante de réalisation, on applique la même décision de masquage pour tous les objets d'une même classe dans toutes les images, dans cette variante, le masque temporel peut être déterminé à partir d'un vecteur binaire de taille p qui donne pour chaque classe d'objets la décision à appliquer dans toute la séquence.

Plus exactement, pour chaque nouvelle image $I_t$, le moteur d'apprentissage exécuté à l'étape 301 détermine, à partir de l'ensemble de la séquence d'images SI, une décision de masquage pour chaque classe d'objets présents dans l'image $I_t$. La décision de masquage est transmise à l'étape de filtrage 302 des points d'intérêts.

Si la décision est négative, les points d'intérêts détectés correspondant à la classe d'objets associée à cette décision sont transmis directement à l'étape de calcul de trajectoire 102.

Si la décision est positive les points d'intérêts $I_t$ appartenant aux zones spatiales masquées par le masque sémantique déterminé à l'étape 201 sont filtrés avant d'être transmis à l'étape 102. L'étape 201 de détermination du masque sémantique spatial est similaire à celle de la méthode décrite à la figure 2.

Ainsi, le masquage temporel déterminé par apprentissage à l'étape 301 est configuré pour optimiser les performances globales de la méthode de localisation en fonction d'un critère d'évaluation de la précision de la trajectoire générée par l'étape 102.

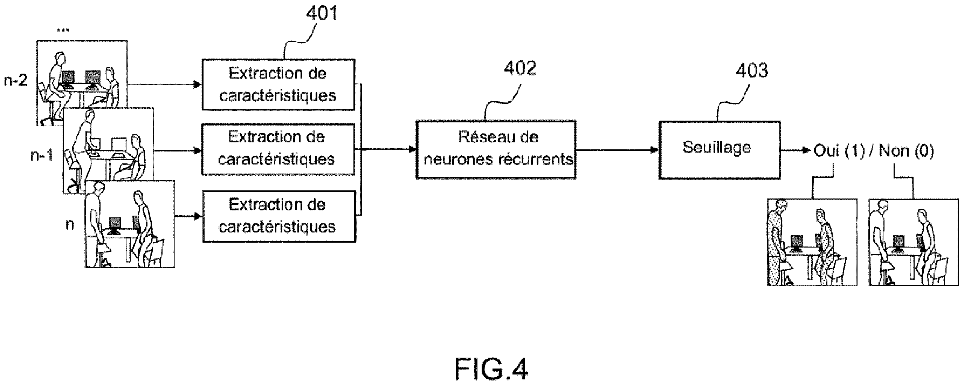

La figure 4 schématise un exemple de réalisation du moteur d'apprentissage utilisé à l'étape 301 pour mettre en œuvre le modèle de prédiction permettant de prédire pour chaque nouvelle image $I_t$, une décision de masquage.

Un premier module 401 d'extraction de caractéristiques est appliqué aux images de la séquence pour générer une représentation spatiale de ces images. Ce premier module 401 est, par exemple, mis en œuvre au moyen d'un réseau de neurones convolutif et a pour effet de réduire la dimension des données à traiter. Les caractéristiques de la représentation spatiale sont, par exemple, extraites en sortie d'une des couches du réseau de neurones convolutif, par exemple la dernière couche. Tout autre algorithme d'encodage permettant de générer une représentation spatiale des images sous forme réduite peut être envisagé pour réaliser le module 401. L'extraction de caractéristiques réalisée par le premier module 401 permet d'obtenir une représentation plus condensée de la séquence d'images afin de limiter la complexité des traitements suivants.

Ensuite, les caractéristiques de la représentation spatiale sont fournies en entrée d'un réseau de neurones récurrents artificiels 402, par exemple un encodeurdécodeur de type LSTM « Long Short Term Memory ». Les représentations sont possiblement réduites par analyse en composantes principales. Dans une variante de réalisation, le premier module 401 est omis et les images sont directement fournies en entrée du module d'apprentissage 402.

Le réseau de neurones récurrents 402 implémente un modèle de prédiction qui détermine une probabilité que le masquage d'une classe d'objets donnée dans l'image d'indice n va améliorer les performances finales de l'algorithme de localisation. Il s'agit plus précisément d'un modèle de classification multi-classes.

Une étape de seuillage 403 permet de générer une décision binaire de masquage ou non pour chaque classe d'objets dans l'image.

Sans sortir du cadre de l'invention, le réseau de neurones récurrent artificiel peut être remplacé par toute autre technique d'intelligence artificielle ou d'apprentissage machine permettant de prédire automatiquement une fonction associant une décision de masquage d'une classe d'objets dans une image avec une contrainte d'optimisation de performances d'un algorithme de cartographie et localisation. Il peut notamment être remplacé par un modèle d'attention de type réseau transformeur ou par un modèle de convolution 1D.

Selon un mode de réalisation particulier, le réseau de neurones récurrents 402 est constitué de plusieurs couches de neurones connectés, la dernière couche ayant p+1 sorties avec p le nombre de classes sémantiques à masquer. La sortie supplémentaire correspond à une classe « rien à masquer ».

Selon un autre mode de réalisation particulier, le réseau de neurones récurrents 402 est constitué de plusieurs sous-réseaux de type LSTM, chaque sousréseau recevant en entrée des caractéristiques extraites d'une couche différente du réseau de neurones convolutif 401 configuré pour générer la représentation spatiale.

Le moteur d'apprentissage automatique décrit à la figure 4, en particulier le réseau de neurones récurrents 402 doit être entrainé, à partir de données d'apprentissage, pour pouvoir apprendre la fonction de prédiction recherchée. Le réseau de neurones récurrents utilise une fonction d'activation (dans sa dernière couche), par exemple une fonction sigmoïde et une fonction de cout du type entropie croisée binaire. La fonction de cout utilise des données d'apprentissage annotées pour évaluer la probabilité de masquage. Il s'agit d'un mécanisme par apprentissage supervisé.

Pour pouvoir entrainer le moteur d'apprentissage décrit à la figure 4 et apprendre le modèle de classification multi-classes implémenté par le module 402, ce moteur d'apprentissage est préalablement entrainé à partir d'une base de données d'apprentissage annotée.

Cette base de données est constituée de plusieurs séquences vidéo, chaque séquence étant associée à une séquence de masquage spatial obtenue, par exemple, par une technique de masquage sémantique ou toute autre technique de masquage spatial. La séquence de masquage spatial défini, dans chaque image, les classes d'objets à masquer. Les séquences vidéo d'apprentissage sont en outre annotées par des séquences de masquage temporelles qui spécifient, pour chaque image et chaque classe d'objets, une décision de masquage.

La tâche d'annoter des séquences vidéo est particulièrement difficile car il est souhaitable que la décision de masquage soit prise en fonction du résultat final visé, c'est-à-dire en fonction d'une évaluation des performances finales de l'algorithme SLAM. En pratique, le travail d'annotation ne peut pas toujours être réalisé à la main, par un expert, car cela représente une charge importante (le nombre de cas à tester et à comparer est extrêmement important). Par ailleurs, l'annotation est a priori dépendante du type d'algorithme de localisation SLAM utilisé, en particulier du choix des algorithmes spécifiques utilisés pour réaliser les étapes 101,302 et 102. En outre, même un expert d'un type d'algorithme SLAM n'est pas toujours en mesure de décider a priori si le masquage d'une image donnée est bénéfique ou pas au résultat final. En pratique, entrainer le modèle de masquage temporel puis tester l'algorithme SLAM pour chaque choix critique d'annotation binaire et pour les combinaisons de ces choix est un travail très complexe et couteux. Enfin, tester tous les masques temporels possibles est également difficilement envisageable puisque, pour une séquence d'apprentissage comportant N images, il y a $2^N$ masques temporels possibles et plusieurs séquences d'apprentissage doivent être utilisées.

Pour résoudre ce problème, une première solution consiste à annoter l'ensemble de la séquence vidéo avec une information de mouvement lorsqu'un mouvement est détecté dans la séquence. Il s'agit alors ici d'un apprentissage faiblement supervisé.

Alternativement, un mode de réalisation particulier de l'invention est proposé pour annoter automatiquement une séquence vidéo d'apprentissage.

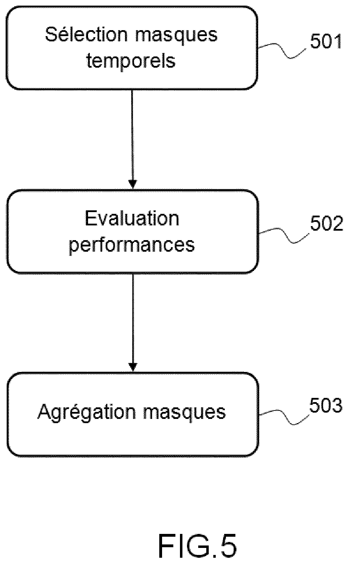

La figure 5 détaille les étapes principales de mise en œuvre d'une méthode d'annotation automatique de données d'apprentissage selon un mode de réalisation de l'invention.

La méthode comporte essentiellement trois étapes 501, 502, 503 décrites via l'organigramme de la figure 5.

La première étape 501 consiste à sélectionner un nombre restreint de masques temporels binaires parmi l'ensemble des masques possibles. La sélection est aléatoire et uniforme. Un masque temporel binaire est constitué par une séquence binaire de 0 et 1 de dimension n par p où p est tel qu'expliqué précédemment. Par exemple, la valeur 0 correspond à une décision de ne pas masquer et la valeur 1 correspond à une décision de masquer. Une première possibilité consiste à générer tous les $2^{n*p}$ masques possibles. Avantageusement, il est préférable de réduire cet ensemble à un nombre restreint de masques afin de limiter la complexité de la méthode.

Pour cela, il est proposé un mode de réalisation particulier de l'étape 501 consistant à générer un ensemble de masques binaires respectant une contrainte d'inclure des blocs de « 0 » consécutifs de longueur au moins égale à $k_0$ et des blocs de « 1 » consécutifs de longueur au moins égale à $k_1$ avec $k_0$ et $k_1$ deux entiers strictement positifs. En effet, un tel modèle de masque incluant des blocs de plusieurs valeurs consécutives identiques est particulièrement adapté au contexte car il est probable que des décisions de masquage identiques doivent être appliquées à plusieurs images consécutives dans la mesure où les objets à masquer évoluent lentement dans la scène. Par ailleurs, cette contrainte permet de limiter le nombre de masques temporels possibles.

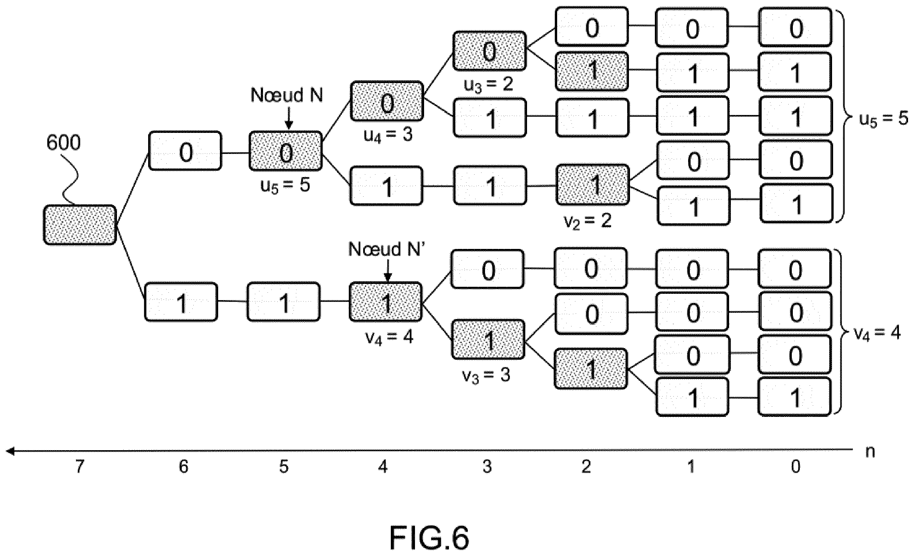

Pour obtenir un tirage aléatoire et uniforme respectant les contraintes précitées, une réalisation possible consiste à représenter l'ensemble des masques temporels sous la forme d'un arbre de masques binaires comme représenté à la figure 6.

La figure 6 représente un exemple d'arbre de masques binaires permettant de générer des masques de longueur $n_{im}$=7 avec $k_0$=2 et $k_1$=3. Les nœuds sur fond grisés sont des nœuds de bifurcation pour lesquels il est possible de choisir l'une des deux branches suivantes, autrement dit l'un des 2 nœuds enfants. Les nœuds sur fond blanc sont des nœuds pour lesquels il n'y a qu'un chemin possible vers un seul nœud enfant possible.

Par exemple les séquences 1110000 et 0011100 respectent les contraintes $k_0$=2 et $k_1$=3 alors que les séquences 1110111 et 0011000 ne les respectent pas.

L'espace des masques temporels possibles qui respectent les contraintes $n_{im}$=7 avec $k_0$=2 et $k_1$=3 est représenté à la figure 6.

L'arbre respectant les contraintes ($n_{im}$, $k_0$, $k_1$) est généré en spécifiant des nœuds de bifurcation et des nœuds sans bifurcation qui sont définis en fonction de leurs parents.

Pour sélectionner un masque temporel à partir de l'arbre respectant les contraintes définies par les paramètres ($n_{im}$, $k_0$, $k_1$), une procédure consiste à débuter au nœud racine 600 et parcourir l'arbre. Dès que l'on rencontre un nœud ayant deux enfants, on choisit aléatoirement l'un des deux nœuds enfants puis on poursuit jusqu'aux feuilles de l'arbre.

Une telle procédure présente l'avantage de permettre une sélection aléatoire et uniforme de masques temporels binaires respectant les contraintes prédéfinies ($n_{im}$, $k_0$, $k_1$).

A l'issue de l'étape 501, on obtient un ensemble de masques temporels binaires.

A l'étape 502, on évalue ensuite, pour chaque masque temporel obtenu à l'étape 501, les performances de la méthode de localisation et cartographie simultanée telle que spécifiée à la figure 3, en remplaçant l'étape 301 par le masque temporel sélectionné à l'étape 501.

L'évaluation des performances peut être réalisée au moyen de toute métrique adaptée pour estimer la précision de la trajectoire déterminée en sortie d'étape 102.

Selon un mode de réalisation particulier, une première métrique possible consiste en une erreur absolue calculée entre la trajectoire estimée et une trajectoire de référence déterminée à partir d'une vérité terrain. Cette erreur est par exemple déterminée via un calcul d'erreur quadratique moyenne ou toute autre métrique d'erreur adaptée.

Selon un autre mode de réalisation, une deuxième métrique possible consiste en un taux de suivi représentant le pourcentage d'images dans une séquence pour lesquelles une trajectoire a été calculée avant que l'algorithme de localisation ne fonctionne plus.

Selon un autre mode de réalisation, une troisième métrique consiste en une combinaison des deux métriques précitées, par exemple calculée via la relation suivante : $\beta = \rho e^{-\lambda\alpha}$ avec $\alpha$ et $\rho$ respectivement les première et deuxième métriques.

Un avantage de cette troisième métrique est qu'elle permet de prendre en compte à la fois la précision donnée par l'erreur absolue sur la trajectoire estimée et la robustesse du taux de suivi. Le paramètre $\lambda$ permet de régler l'influence respective accordée à chacune des deux métriques. Si la seconde métrique $\rho$ est égale à 100% et que la première métrique $\alpha$ est faible devant l'inverse de $\lambda$, alors la troisième métrique est quasi linéaire avec $\alpha$. Si le taux de suivi $\rho$ est plus faible, la troisième métrique est proportionnellement pénalisée. De telles dépendances linéaires font de cette métrique une mesure plus proche de l'intuition humaine. Par exemple, la valeur du paramètre $\lambda$ est choisie entre 1 et 10.

A l'étape 503, on calcule enfin, par agrégation, un masque temporel unique à partir de l'ensemble des masques temporels obtenus à l'étape 501 et de leurs performances évaluées à l'étape 502.

Pour cela, on détermine une combinaison des masques temporels pondérée par leurs métriques d'évaluation de performance.

Selon une première variante de réalisation de l'étape 503, on réalise une combinaison linéaire $R = \sum_{k=0}^{N} S_k$ $.\beta_k$, avec $S_k$ une séquence binaire correspondant à un masque temporel sélectionné à l'étape 501 et $\beta_k$ une métrique

de performances de cette séquence calculée à l'étape 502, N étant le nombre de séquences sélectionnées à l'étape 501.

Ensuite, on normalise le vecteur R entre 0 et 1, puis on binarise le vecteur R en appliquant un seuil prédéterminé, de valeur comprise entre 0 et 1, à chaque composante du vecteur. On obtient une séquence binaire unique qui correspond au masque temporel recherché.

Selon une variante, plusieurs seuils prédéterminés sont choisis, par exemple 9 seuils {0,1 ; 0,2 ;... ;0,9}. Chacun de ces seuils est utilisé pour binariser le vecteur R. On obtient autant de séquences binaires que de seuils. Enfin, on évalue les performances de l'algorithme de localisation pour chacune de ces séquences et on retient celle qui donne les meilleures performances.

Selon une deuxième variante de réalisation de l'étape 503, on calcule une combinaison linéaire des différences entre chaque couple de séquences binaires. Autrement dit, pour tout couple de masques temporels $(S_x,S_y)$ ayant des performances respectives $(\beta_x, \beta_y)$, on calcule la combinaison : $R = \sum_{x,y}(S_x - S_y)(\beta_x - \beta_y)$. Ensuite on applique les mêmes étapes que décrites ci-dessus pour binariser le vecteur R en une séquence temporelle unique.

Selon une variante, la combinaison R est pondérée par un coefficient permettant de renforcer les différences importantes entre deux séquences $(S_x,S_y)$ :

$$R = \sum_{x,y} \max(0, sgn(|S_x - S_y| - \max(\sigma_r|S_x|, \sigma_a)))(S_x - S_y)(\beta_x - \beta_y).$$

$\sigma_\alpha$ est un seuil de bruit absolu en dessous duquel le résultat du calcul de différences pondérées doit être considéré comme égal à 0,

$\sigma_r$ est un seuil de bruit relatif

Le coefficient de pondération inséré permet de mettre à 0 certaines valeurs qui sont considérées comme non significatives.

Selon encore une autre variante, l'étape 503 consiste à sélectionner le masque temporel qui fournit les meilleures performances (selon le critère choisi) parmi les masques obtenus à l'étape 501.

A l'issue de l'étape 503, on obtient une séquence temporelle binaire qui sert à annoter la séquence d'images. Le procédé de la figure 5 est itéré pour chaque séquence d'images d'une base de données d'apprentissage.

Ainsi, le procédé d'annotation de la figure 5 permet de générer automatiquement des données d'apprentissage annotées afin de réaliser ensuite un apprentissage auto-supervisé.

Le procédé d'annotation a été décrit ci-dessus dans le cas d'une seule classe d'objets sémantique à masquer. Dans le cas de plusieurs classes d'objets, les adaptations suivantes doivent être réalisées.

A l'étape 501, on génère un ensemble de séquences temporelles pour chaque classe d'objets.

A l'étape 503, on applique le calcul de la combinaison R pour chaque classe d'objets, on binarise la combinaison R selon la méthode indiquée pour chaque classe d'objets. Ensuite, on transforme ces séquences binaires en masques temporels en ne retenant que les décisions de masquage relatives à la classe d'objets considérées et en appliquant une décision de non masquage pour les autres classes. Enfin, on sélectionne le masque temporel qui permet d'obtenir les meilleures performances pour l'algorithme de localisation.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention peut être implémentée sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

L'invention peut aussi être implémentée dans un système de localisation et cartographie simultanée embarqué dans un dispositif mobile comprenant en outre un ou plusieurs capteurs de perception de l'environnement.

La cartographie et la trajectoire calculées par l'invention peuvent être restitués à un utilisateur via une interface homme machine dans un environnement virtuel en trois dimensions.

Références

[0] Muhamad Risqi U. Saputra, Andrew Markham, and Niki Trigoni. Visual SLAM and structure from motion in dynamic environments: A survey. ACM Comput. Surv., 2018

[1] R. Mur-Artal and J. D. Tardôs. ORB-SLAM2: An open-source SLAM system for monocular, stereo, and RGB-d cameras. IEEE Transactions on Robotics, 2017

[2] Binbin Xu, Wenbin Li, Dimos Tzoumanikas, Michael Bloesch, Andrew Davison, and Stefan Leutenegger. MID-fusion: Octree-based object-level multiinstance dynamic SLAM. In International Conférence on Robotics and Automation (ICRA), 2019

[3] R. Scona, M. Jaimez, Y. R. Petillot, M. Fallon, and D. Cremers. StaticFusion: Back-ground reconstruction for dense RGB-d SLAM in dynamic environments. In 2018 IEEE International Conférence on Robotics and Automation (ICRA), 2018.

[4] Jiyu Cheng, Yuxiang Sun, and Max Q.-H. Meng. Improving monocular visual SLAM in dynamic environments: an optical-flow-based approach. Advanced Robotics, 2019

[5] M. Kaneko, K. Iwami, T. Ogawa, T. Yamasaki, and K. Aizawa. Mask-SLAM: Robust feature-based monocular SLAM by masking using semantic segmentation. In IEEE/CVF Conférence on Computer Vision and Pattern Recognition Workshops (CVPRW), 2018

[6] Kaiming He, Georgia Gkioxari, Piotr Dollar, and Ross Girshick. Mask r-CNN. In IEEE International Conférence on Computer Vision (ICCV), 2017.

[7] B. Bescos, J. M. Fácil, J. Civera, and J. Neira. DynaSLAM: Tracking, mapping, and inpainting in dynamic scenes. IEEE Robotics and Automation Letters, 2018.

[8] Matthias Schorghuber, Daniel Steininger, Yohann Cabon, Martin Humenberger, and Margrit Gelautz. SLAMANTIC - leveraging semantics to improve VSLAM in dynamic environments. In Proceedings of the IEEE/CVF International Conférence on Computer Vision (ICCV) Workshops, 2019

[9] Adrian Bojko, Romain Dupont, Mohamed Tamaazousti, and Hervé Le Borgne. Learning to segment dynamic objects using slam outliers. In 25th International Conférence on Pattern Recognition (ICPR), 2021

**Revendications**

1. Procédé, mis en œuvre par ordinateur, d'apprentissage automatique d'un modèle de prédiction (402) configuré pour déterminer, pour une séquence d'images donnée associée à une séquence de masquage spatial desdites images, une séquence de masquage temporel constituée, pour chaque image, d'une décision d'application de tout ou partie du masquage spatial à l'image, le modèle de prédiction (402) étant entraîné à partir de données d'apprentissage pour déterminer une séquence de masquage temporel qui optimise un critère de performances prédéterminé d'un algorithme de cartographie et localisation simultanées d'un dispositif mobile apte à acquérir ladite séquence d'images et à localiser le dispositif mobile dans son environnement, le critère de performances étant basé sur une métrique d'évaluation de performance dudit algorithme utilisant ladite séquence de masquage temporel pour masquer la séquence d'images au moyen de la séquence de masquage spatial, la métrique d'évaluation de performances étant prise parmi une première métrique d'évaluation de la précision de la trajectoire estimée par l'algorithme de cartographie et localisation, une seconde métrique d'évaluation d'un pourcentage d'images dans la séquence d'images pour lequel une trajectoire a été calculée par l'algorithme de cartographie et localisation, ou une combinaison de la première métrique et de la seconde métrique.

2. Procédé d'apprentissage automatique selon la revendication 1 dans lequel ledit modèle de prédiction (402) est au moins basé sur un réseau de neurones récurrent.

3. Procédé d'apprentissage automatique selon la revendication 2 dans lequel ledit modèle de prédiction (401,402) est constitué d'un premier modèle d'apprentissage destiné à générer une représentation spatiale à partir desdites images et d'au moins un réseau de neurones récurrent destiné à déterminer la décision d'application de tout ou partie du masquage spatial à une image à partir de ladite représentation spatiale.

4. Procédé d'apprentissage automatique selon la revendication 3 dans lequel le réseau de neurones récurrent est configuré pour fournir une probabilité d'amélioration des performances de l'algorithme de cartographie et localisation simultanées en fonction de l'application de tout ou partie du masquage spatial et le procédé comprend en outre une étape de seuillage (403) de la dite probabilité pour générer une décision binaire d'application de tout ou partie du masquage spatial à chaque image.

5. Procédé d'apprentissage automatique selon l'une quelconque des revendications 1 à 4 dans lequel une séquence de masquage spatial est une séquence de masquage sémantique configurée pour masquer une ou plusieurs classe(s) d'objets dans la séquence d'images.

6. Procédé selon la revendication 5 dans lequel une séquence de masquage temporel est constituée de décisions binaires de masquage pour chaque classe d'objets dans l'ensemble de la séquence d'images.

7. Procédé selon la revendication 5 dans lequel une séquence de masquage temporel est constituée de décisions binaires de masquage pour chaque image et chaque classe d'objets dans l'image.

8. Procédé, mis en œuvre par ordinateur, d'annotation automatique de données d'apprentissage pour entraîner un modèle de prédiction (402)configuré pour déterminer, pour une séquence d'images donnée associée à une séquence de masquage spatial desdites images, une séquence de masquage temporel constituée, pour chaque image, d'une décision d'application de tout ou partie du masquage spatial à l'image, le procédé comprenant les étapes de :

- Recevoir un ensemble de données d'apprentissage comprenant une séquence d'images et une séquence de masquage spatial associée à la séquence d'images,
- Sélectionner (501) un sous-ensemble de séquences de masquage temporel parmi toutes les séquences possibles, une séquence de masquage temporel étant constituée, pour chaque image à masquer, d'une décision binaire d'application de tout ou partie du masquage spatial à l'image,
- Déterminer (502), pour chaque séquence de masquage temporel du sous-ensemble, une métrique d'évaluation de performance d'un algorithme de cartographie et localisation simultanées utilisant ladite séquence de masquage temporel pour masquer la séquence d'images au moyen de la séquence de masquage spatial,
- Agréger (503) au moins une partie des séquences de masquage temporel du sous-ensemble à l'aide d'une combinaison pondérée par leurs métriques d'évaluation de performance, afin de produire une unique séquence de masquage temporel constituant une séquence d'annotations dudit ensemble de données d'apprentissage,
- la métrique d'évaluation de performances étant prise parmi une première métrique d'évaluation de la précision de la trajectoire estimée par l'algorithme de cartographie et localisation, une seconde métrique d'évaluation d'un pourcentage d'images dans la séquence d'images pour lequel une trajectoire a été calculée par l'algorithme de cartographie et localisation, ou une combinaison de la première métrique et de la seconde métrique.

9. Procédé d'annotation automatique de données d'apprentissage selon la revendication 8 dans lequel l'étape de sélectionner (501) un sous-ensemble de séquences de masquage temporel consiste à sélectionner aléatoirement et uniformément un nombre restreint prédéterminé de séquences binaires comprenant des blocs d'au moins $k_0$ valeurs à « 0 » consécutives et $k_1$ valeurs à « 1 » consécutives, avec $k_0$ et $k_1$ deux nombres entiers strictement positifs.

10. Procédé d'annotation automatique de données d'apprentissage selon l'une quelconque des revendications 8 ou 9 dans lequel la combinaison de la première métrique et de la seconde métrique est donnée par la formule $p*e^{-\lambda*\alpha}$, où $\alpha$ désigne la première métrique, p désigne la seconde métrique et $\lambda$ est un paramètre prédéterminé.

11. Procédé d'annotation automatique de données d'apprentissage selon l'une quelconque des revendications 8 à 10 dans lequel l'étape (503) d'agréger au moins une partie des séquences de masquage temporel consiste au moins à :

   - calculer une combinaison des séquences de masquage temporel ou des différences par paires de séquences de masquage temporel, pondérées par leurs métriques d'évaluation de performance,
   - normaliser la combinaison entre 0 et 1,
   - appliquer au moins un seuil prédéterminé à la combinaison normalisée pour produire la séquence d'annotations.

12. Procédé d'annotation automatique de données d'apprentissage selon la revendication 11 comprenant en outre les étapes de :

   - Appliquer plusieurs seuils prédéterminés à la combinaison normalisée pour produire plusieurs séquences d'annotations candidates,
   - Évaluer les performances de l'algorithme de cartographie et localisation simultanées pour chaque séquence d'annotations candidates et retenir la séquence d'annotations qui produit la métrique d'évaluation la plus optimale.

13. Procédé d'apprentissage automatique d'un modèle de prédiction selon l'une quelconque des revendications 1 à 7 dans lequel ledit modèle est entrainé au moyen des données d'apprentissage obtenues par le procédé d'annotation automatique selon l'une quelconque des revendications 8 à 12.

14. Procédé de cartographie et localisation simultanées d'un dispositif mobile comprenant la mise en œuvre (301) d'un modèle de prédiction entrainé au moyen du procédé d'apprentissage automatique selon l'une quelconque des revendications 1 à 7 ou 13pour appliquer, pour chaque image d'une séquence d'images donnée acquise par le dispositif mobile et associée à une séquence de masquage spatial, une décision d'application de tout ou partie du masquage spatial à l'image au cours de l'exécution d'un algorithme de cartographie et localisation simultanées du dispositif mobile.

15. Procédé de cartographie et localisation simultanées d'un dispositif mobile selon la revendication 14 comprenant les étapes de :

   - acquérir une séquence temporelle d'images à l'aide du dispositif mobile et, pour chaque image reçue,
   - Déterminer (101) un ensemble de points d'intérêts dans l'image,
   - Exécuter (301) le modèle de prédiction pour l'image reçue et une pluralité d'images antérieures afin de déterminer une décision de masquage spatial pour tout ou partie de l'image reçue,
   - Si la décision de masquage spatial est positive, générer (201) un masque spatial et masquer l'ensemble de points d'intérêts de l'image au moyen du masque spatial pour générer un ensemble de points d'intérêts filtrés,
   - Appliquer (102) un algorithme d'estimation et suivi de pose de caméra audit ensemble de points d'intérêts filtrés pour déterminer une trajectoire du dispositif mobile dans son environnement.

16. Produit programme d'ordinateur comprenant des instructions de code pour la mise en œuvre de l'un quelconque des procédés selon l'une quelconque des revendications 1 à 15.

17. Système de cartographie et localisation simultanées d'un dispositif mobile comprenant un dispositif mobile apte à acquérir des données de perception de son environnement pour produire une séquence d'images et une unité de calcul configurée pour mettre en œuvre le procédé de cartographie et localisation simultanées selon l'une quelconque des revendications 14 à 15 à partir de ladite séquence d'images.

101

Détection de
points d'intérêts

103

Mise en correspondance
et filtrage de points
d'intérêts

102

Calcul d'une
pose de caméra

I ⟶

PI

## FIG.1

201

Génération de
masque spatial

202

102

I ⟶

Détection de
points d'intérêts

Filtrage de
points d'intérêts

Calcul d'une
pose de caméra

101

FPI

## FIG.2

FIG.3

FIG.4

Sélection masques
temporels ⟋501

Evaluation
performances ⟋502

Agrégation masques ⟋503

# FIG.5

FIG.6

Europäisches
Patentamt

European
Patent Office

Office européen
des brevets

# RAPPORT DE RECHERCHE EUROPEENNE

Numéro de la demande

**EP 22 21 0423**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LI RUIHAO ET AL: "DeepSLAM: A Robust Monocular SLAM System With Unsupervised Deep Learning", IEEE TRANSACTIONS ON INDUSTRIAL ELECTRONICS, IEEE SERVICE CENTER, PISCATAWAY, NJ, USA, vol. 68, no. 4, 25 mars 2020 (2020-03-25), pages 3577-3587, XP011825803, ISSN: 0278-0046, DOI: 10.1109/TIE.2020.2982096 [extrait le 2020-12-15] * abrégé; figure 2 * * Section IV.A * * Section IV.B * * Section IV.C *<br>———— | 1-17 | INV. G06T7/73 G06V10/82 G06V20/70 |
| A | BOJKO ADRIAN ET AL: "Learning to Segment Dynamic Objects using SLAM Outliers", 2020 25TH INTERNATIONAL CONFERENCE ON PATTERN RECOGNITION (ICPR), IEEE, 10 janvier 2021 (2021-01-10), pages 9780-9787, XP033909211, DOI: 10.1109/ICPR48806.2021.9412341 * Section III *<br>———— | 5-7 | |

**DOMAINES TECHNIQUES RECHERCHES (IPC)**

G06T
G06V

Le présent rapport a été établi pour toutes les revendications

| Lieu de la recherche | Date d'achèvement de la recherche | Examinateur |
|---|---|---|
| La Haye | 21 mars 2023 | Boltz, Sylvain |

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MUHAMAD RISQI ; U. SAPUTRA ; ANDREW MARKHAM ; NIKI TRIGONI.** Visual SLAM and structure from motion in dynamic environments: A survey. *ACM Comput. Surv.,* 2018
- **R. MUR-ARTAL ; J. D. TARDÔS.** ORB-SLAM2: An open-source SLAM system for monocular, stereo, and RGB-d cameras. *IEEE Transactions on Robotics,* 2017
- **BINBIN XU ; WENBIN LI ; DIMOS TZOUMANIKAS ; MICHAEL BLOESCH ; ANDREW DAVISON ; STEFAN LEUTENEGGER.** MID-fusion: Octree-based object-level multiinstance dynamic SLAM. *International Conférence on Robotics and Automation (ICRA,* 2019
- **R. SCONA ; M. JAIMEZ ; Y. R. PETILLOT ; M. FALLON ; D. CREMERS.** StaticFusion: Back-ground reconstruction for dense RGB-d SLAM in dynamic environments. *2018 IEEE International Conférence on Robotics and Automation (ICRA),* 2018
- **JIYU CHENG ; YUXIANG SUN ; MAX Q.-H. MENG.** Improving monocular visual SLAM in dynamic environments: an optical-flow-based approach. *Advanced Robotics,* 2019
- **M. KANEKO ; K. IWAMI ; T. OGAWA ; T. YAMASAKI ; K. AIZAWA.** Mask-SLAM: Robust feature-based monocular SLAM by masking using semantic segmentation. *IEEE/CVF Conférence on Computer Vision and Pattern Recognition Workshops (CVPRW),* 2018
- **KAIMING HE ; GEORGIA GKIOXAR ; PIOTR DOLLAR ; ROSS GIRSHICK ; MASK R-CNN.** *IEEE International Conférence on Computer Vision (ICCV),* 2017
- **B. BESCOS ; J. M. FÁCIL ; J. CIVERA ; J. NEIRA.** DynaSLAM: Tracking, mapping, and inpainting in dynamic scenes. *IEEE Robotics and Automation Letters,* 2018
- **MATTHIAS SCHORGHUBER ; DANIEL STEININGER ; YOHANN CABON ; MARTIN HUMENBERGER ; MARGRIT GELAUTZ.** SLAMANTIC - leveraging semantics to improve VSLAM in dynamic environments. *Proceedings of the IEEE/CVF International Conférence on Computer Vision (ICCV) Workshops,* 2019
- **ADRIAN BOJKO ; ROMAIN DUPONT ; MOHAMED TAMAAZOUSTI ; HERVÉ LE BORGNE.** Learning to segment dynamic objects using slam outliers. *25th International Conférence on Pattern Recognition (ICPR),* 2021